# EUROPEAN PATENT SPECIFICATION

(11) **EP 4 286 257 B1**
(45) Date of publication and mention of the grant of the patent: **24.12.2025**
(21) Application number: 23176794.8
(22) Date of filing: 01.06.2023
(51) Int. Cl.: B62D 53/10

(54) **TRACTOR-TRAILER COMBINATION WITH EMERGENCY LOCKING KINGPIN**
SATTEZUGKOMBINATION MIT NOTVERRIEGELUNGSZAPFEN
COMBINAISON TRACTEUR-REMORQUE AVEC PIVOT D'ATTELAGE À VEROUILLAGE D'URGENCE

(30) Priority: 01.06.2022 NL 2032057
(43) Date of publication of application: 06.12.2023
(73) Proprietor: Van De Wetering, Martinus Theodorus, 5396 PB Lithoijen (NL)
(72) Inventor: Van De Wetering, Martinus Theodorus, 5396 PB Lithoijen (NL)
(74) Representative: Verhees, Godefridus Josephus Maria

(56) References cited:
- WO-A1-2010/019027
- WO-A1-2020/064392
- DE-A1- 102004 048 139
- US-A- 2 736 573
- US-B2- 7 654 553

## Description

### Technical field of the invention

The invention relates to a tractor-trailer combination comprising:
- a trailer provided with a kingpin, and
- a tractor comprising a fifth wheel equipped with:
   - a kingpin opening, for receiving the kingpin, as well
   - an entry opening connected to the kingpin opening, for guiding the kingpin from a position outside the kingpin opening to the kingpin opening during coupling,
   - locking means, for retaining the kingpin in the kingpin opening, which locking means comprise a locking element which is movable between a locking position in which the kingpin, in the mutually coupled position of tractor and trailer, is locked in the kingpin opening, and a release position in which the kingpin can be moved in and out of the kingpin opening,
   - blocking means comprising:
      - a blocking element, as well as
      - displacement means for displacing the blocking element between a blocking position in which the movement of the kingpin, in the coupled position of tractor and trailer, in a direction away from the kingpin opening is limited, and a release position in which the kingpin can be moved unlimited in a direction away from the kingpin opening,
- which tractor further comprises:
   - a sensor unit which can determine the position of the kingpin in the fifth wheel, and
   - a control unit to which the sensor unit is connected.

### Background of the invention

A tractor-trailer combination is known from DE 10 2004 048 139 A1. In this known tractor-trailer combination, the blocking means are activated as soon as, in a situation where the locking element is in the release position, the distance between the fifth wheel and the kingpin exceeds a certain limit value, whereby the kingpin threatens to slide off the tractor. If the locking of the kingpin in the fifth wheel becomes inoperative while driving, for example because the locking element breaks or unintentionally slips out of the locking position, the tractor may lose the trailer if this is not detected in time and the tractor is not braked in time and comes to a standstill. This can lead to dangerous situations, especially if hazardous (flammable, explosive) substances are present in the trailer.

From US 7 654 553 B2 a tractor trailer combination according to the preamble of claim 1 is known, in which a fifth wheel coupling is provided with an emergency locking with a locking element which, after coupling of a king pin to the fifth wheel, automatically enters the locking position and only comes into the release position after activation of an unlocking mechanism.

US 2 736 573 A1 discloses a tractor-trailer combination provided with a fifth wheel which is also provided with an emergency locking with a locking element which, after coupling a kingpin to the fifth wheel, automatically enters the locking position and only after activation of an unlocking mechanism comes into the release position.

### Summary of the invention

An object of the invention is to provide a tractor-trailer combination of the type described in the preamble in which the risk of accidents is smaller than with the known tractor-trailer combination. To this end the tractor-trailer combination according to the invention is characterized in that the blocking element in the blocking position is present in the entry opening and blocks displacement of the kingpin in a direction away from the kingpin opening, and the blocking element in the release position releases the entry opening so that the kingpin can be moved through the entry opening, the control unit being configured to immediately activate the blocking means to move the blocking element from the release position to the blocking position, as soon as the control unit detects that the kingpin enters the entry opening during driving, with the locking means being activated to move the locking element into the locking position. The locking element ensures that the kingpin is completely in the kingpin opening in the locked position. As soon as the kingpin is partly present in the entry opening while driving, this means that the locking element is no longer in the locked position and the kingpin can therefore become detached from the fifth wheel. In that case, by blocking the entry opening with a blocking element, the kingpin is stopped so that the semi-trailer does not come loose from the tractor. These measures prevent the semi-trailer from becoming detached from the tractor while driving away and while driving. This means that damage to the trailer and especially economic damage resulting from the traffic nuisance caused by a detached trailer can be prevented. As soon as the control unit intervenes and activates the blocking means, the driver receives a signal so that he can drive to a position where the fifth wheel coupling of the tractor can be repaired. With the tractor-trailer combination according to the invention, a long-standing and well-known problem in the transport sector is adequately solved, something that was previously not possible despite great efforts.

An embodiment of the tractor-trailer combination according to the invention is characterized in that the tractor is provided with a serial data bus (Controller Area Network bus or CAN bus) with which electronic control units of the tractor are linked and can communicate with each other without a host computer and that the control unit, the sensor means and the first and second displacement means are coupled to the data bus. This makes it possible to make favorable use of control units already present in the tractor, for example to issue a warning signal and/or to brake the tractor.

A further embodiment of the tractor-trailer combination according to the invention is characterized in that the kingpin is provided with a mark located in the center of the underside of the kingpin and the sensor unit comprises a sensor which, when the tractor and trailer are coupled, is present in the middle of the kingpin opening below the kingpin opening and with which the distance from the marking to the sensor can be determined, wherein the control unit is configured to activate the blocking means to move the blocking element from the release position move to the blocking position, in case the control unit detects that the distance between the sensor and the marking exceeds a limit value. The limit value is preferably the distance from the kingpin when it is centered in the kingpin opening to the locking element.

Yet another embodiment of the tractor-trailer combination according to the invention is characterized in that the tractor comprises further displacement means which are configured to move the sensor, during coupling and/or immediately after coupling the semi-trailer to the tractor, from a rest position below the kingpin at a first distance from the mark, where the position of the mark cannot be determined with the sensor, to a working position wherein the sensor is present at a second distance from the marking, wherein the position of the marking can be determined with the sensor. As a result, the sensor cannot be damaged during the coupling of the tractor with the trailer.

### Brief description of the drawings

The invention will be explained in more detail below on the basis of an exemplary embodiment of the tractor-trailer combination according to the invention shown in the drawings. Hereby shows:
Figure 1 a tractor-trailer combination before the tractor is coupled to the semi-trailer;
Figure 2 a perspective view of part of the tractor-trailer combination shortly before the fifth wheel couples with the kingpin;
Figure 3 a section along line III-III in figure 2 after the tractor has been coupled to the semi-trailer;
Figure 4 an embodiment of the fifth wheel with kingpin in unlocked position of the kingpin; and
Figure 5 the fifth wheel shown in figure 4 with kingpin in the locked position of the kingpin.

### Detailed description of the drawings

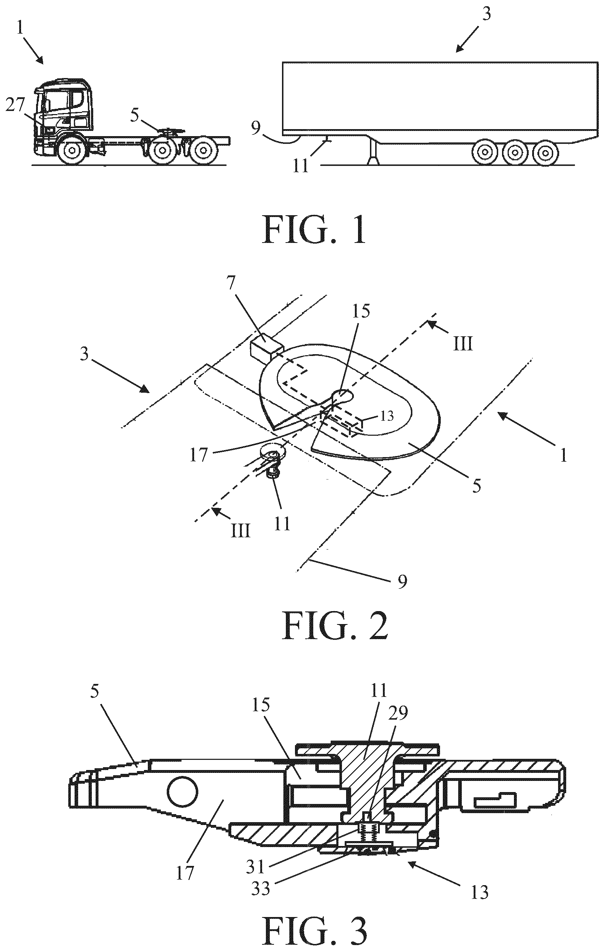

Figure 1 shows a tractor-semi-trailer combination in which the tractor 1 is disconnected from the semi-trailer 3. The tractor 1 is provided with a fifth wheel 5 for coupling to the semi-trailer 3. The tractor 1 is furthermore provided with a CAN bus 7 for interconnecting control units. The semi-trailer 3 is provided with a sliding plate 9 along which the fifth wheel 5 can slide during coupling, and, in coupled position of the semi-trailer 3 and the tractor 1, the semi-trailer 3 rests with this sliding plate 9 on the fifth wheel 5. The semi-trailer 3 is furthermore provided with a kingpin 11 which is fixed at the bottom against the sliding plate 9 and which is locked in the fifth wheel 5 when the tractor and semi-trailer are coupled.

Figure 2 shows a part of the tractor-trailer combination before the fifth wheel 5 is coupled to the kingpin 11. A sensor unit 13 is mounted in the bottom center against the fifth wheel 5 for measuring the position of the kingpin 11 in the fifth wheel 5. The fifth wheel 5 is provided with a kingpin opening 15 for receiving the kingpin 11, as well as an entry opening 17 connected to the kingpin opening 15, for guiding the kingpin 11 from a position outside the kingpin opening 15 to the kingpin opening 15 during coupling.

Figure 3 shows the kingpin 11, the fifth wheel 5 and the sensor unit 13 in section along the line III-III shown in Figure 2, after the kingpin 11 has been coupled to the fifth wheel 5. In the middle of the bottom of the kingpin 11, a hole is provided in which a marking 29, designed as a magnet, is present. The sensor unit 13 is provided with an inductive sensor 31 and is present at the location of the kingpin opening 15 in the fifth wheel 5 below the fifth wheel. A receding recess 17 extends from this central hole 15 (see also figure 2) for catching the kingpin 5 during the coupling of the tractor 7 with the semi-trailer 3 and guiding the kingpin 11 to the kingpin opening 15.

The sensor 31 is movable between a rest position below the kingpin 11 at a first distance from the marking 29, where the position of the marking 29 cannot be determined with the sensor 31, to a working position in which the sensor 31 is at a second distance from the marking 29, where the position of the marking 29 can be determined with the sensor 31 (this is the position shown in figure 3).

A bridge piece 33 is mounted at the bottom against the fifth wheel 9, on the bridge piece guide pins are present along which the sensor 31 can be moved. Coil springs are present between the sensor and the bridge piece, the coil means press the sensor 31 against the bottom of the kingpin 11.

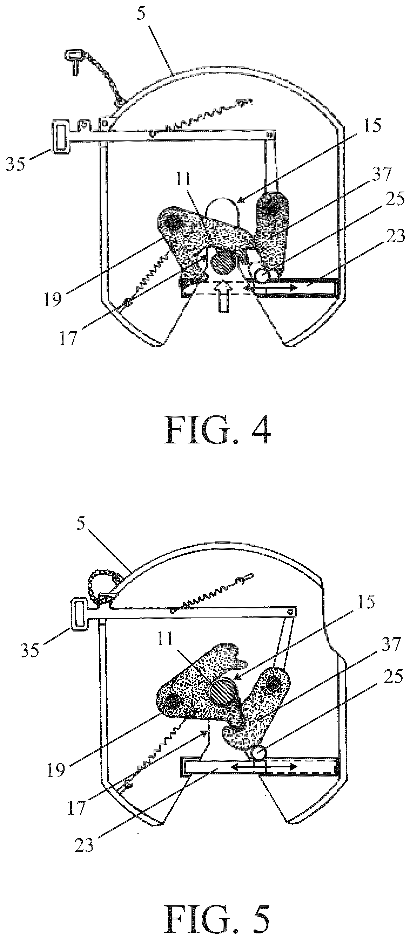

Figures 4 and 5 show an embodiment of fifth wheel 5 viewed from below. The fifth wheel 5 is provided with a locking element 19 for locking the kingpin 11 in the kingpin opening 15. This locking element 9 is movable between a locking position in which the kingpin 11 is locked in the kingpin opening 15 (figure 5) and a release position in which the kingpin 11 can be moved in and out of the kingpin opening 15 (figure 4). During the coupling of the tractor and the semi-trailer, the kingpin 11 pushes the locking element 9 to the locking position. In the locking position, see figure 5, the locking element 9 is blocked against rotation by a spring-loaded pawl 37. To release the locking element 9, the pawl 37 can be pulled back against the spring force with a lever 35. In Figure 4, the pawl 37 is in the retracted position.

In the event that the locking element 19 should come loose or break off while driving, the tractor is provided with a protection against the semi-trailer becoming detached from the tractor. For this purpose the fifth wheel 5 is provided with blocking means which block the king pin 11 in the entry opening 17 against displacement. These blocking means have a blocking element 23 that can be moved by displacement means 25 between a blocking position (figure 5) in which the kingpin 11 is blocked in the entry opening 17 against displacement in a direction away from the kingpin opening 15, and a release position (figure 4) in which the kingpin 11 can be moved through the entry opening 17. The blocking element 23 is provided with a toothed rack which cooperates with a gear wheel which can be rotated by a motor of the displacement means 25 in order to move the blocking element.

The displacement means 25 and the sensor 31 are connected to the control unit 7 so that if a position of the kingpin 11 is detected in which it is partly present in the entry opening 17, the control unit 7 activates the blocking means which then moves the blocking element 23 from the release position to the blocking position. The control unit 7 is connected to the CAN bus 27 of the tractor, so that everything can be controlled from the tractor. Instead of the displacement means 25 and the sensor 31 being connected to the control unit, they can also be connected directly to the CAN bus 27, so that communication between the components takes place via the CAN bus 27. The latter is preferred because in that case control unit 7 can be replaced more easily because it is then only connected to the CAN bus 27 and can be accommodated in the cabin of the tractor.

Although the invention has been elucidated in the foregoing with reference to the drawings, it should be stated that the invention is by no means limited to the embodiment shown in the drawings. The scope of the invention is defined by the appended claims.

## Claims

1. A tractor-trailer combination comprising:
- a trailer (3) provided with a kingpin (11), and
- a tractor (1) comprising a fifth wheel (5) equipped with:
- a kingpin opening (15), for receiving the kingpin (11), as well
- an entry opening (17) connected to the kingpin opening (15), for guiding the kingpin (11) from a position outside the kingpin opening (15) to the kingpin opening (15) during coupling,
- locking means, for retaining the kingpin (11) in the kingpin opening (15), which locking means comprise a locking element (19) which is movable between a locking position in which the kingpin (11), in the mutually coupled position of tractor and trailer, is locked in the kingpin opening (15), and a release position in which the kingpin (11) can be moved in and out of the kingpin opening (15),
- blocking means comprising:
- a blocking element (23), as well as
- displacement means (25) for displacing the blocking element (23) between a blocking position in which the movement of the kingpin (11), in the coupled position of tractor and trailer, in a direction away from the kingpin opening (15) is limited, and a release position in which the kingpin (11) can be moved unlimited in a direction away from the kingpin opening (15),
**characterised in that** the tractor (1) further comprises:
- a sensor unit (13) which can determine the position of the kingpin (11) in the fifth wheel (5), and
- a control unit (7) to which the sensor unit (13) is connected,
wherein the blocking element (23) in the blocking position is present in the entry opening (17) and blocks displacement of the kingpin (11) in a direction away from the kingpin opening (15), and the blocking element (23) in the release position releases the entry opening (17) so that the kingpin (11) can be moved through the entry opening (17), the control unit (7) being configured to immediately activate the blocking means to move the blocking element (23) from the release position to the blocking position, as soon as the control unit (7) detects that the kingpin (11) enters the entry opening (17) during driving, with the locking means being activated to move the locking element (19) into the locking position.

2. The tractor-trailer combination according to claim 1, **characterized in that** the tractor (1) is provided with a serial data bus (27) with which electronic control units of the tractor are coupled and can communicate with each other without a host computer and that the control unit (7), the sensor unit (13) and the displacement means (25) are coupled to the data bus (27).

3. The tractor-trailer combination according to claim 1 or 2, **characterized in that** the kingpin (11) is provided with a mark (29) located in the center of the underside of the kingpin (11) and the sensor unit (13) comprises a sensor (31) which, when the tractor and trailer are coupled, is present in the middle of the kingpin opening (15) below the kingpin opening and with which the distance from the marking (29) to the sensor (31) can be determined, wherein the control unit (7) is configured to activate the blocking means to move the blocking element from the release position move to the blocking position, in case the control unit (7) detects that the distance between the sensor (31) and the marking (29) exceeds a limit value.

4. The tractor-trailer combination according to claim 3, **characterized in that** the tractor (1) comprises further displacement means which are configured to move the sensor (31), during coupling and/or immediately after coupling the semi-trailer (3) to the tractor (1), from a rest position below the kingpin (11) at a first distance from the mark (29), where the position of the mark (29) cannot be determined with the sensor (31), to a working position wherein the sensor (31) is present at a second distance from the marking (29), wherein the position of the marking (29) can be determined with the sensor (31).

## Patentansprüche

1. Eine Sattelzugkombination, umfassend:
- einem Anhänger (3) mit einem Königszapfen (11) und
- einer Zugmaschine (1) mit einer Sattelkupplung (5), die mit Folgendem ausgestattet ist:
- einer Königszapfenöffnung (15) zur Aufnahme des Königszapfens (11) sowie
- einer mit der Königszapfenöffnung (15) verbundenen Einführungsöffnung (17) zur Führung des Königszapfens (11) von einer Position außerhalb der Königszapfenöffnung (15) in die Königszapfenöffnung (15) während des Ankuppelns,
- einer Verriegelungseinrichtung zum Halten des Königszapfens (11) in der Königszapfenöffnung (15), wobei diese Verriegelungseinrichtung ein Verriegelungselement (19) umfasst, das zwischen einer Verriegelungsposition, in der der Königszapfen (11) in der gekoppelten Position von Zugmaschine und Anhänger in der Königszapfenöffnung (15) verriegelt ist, und einer Entriegelungsposition, in der der Königszapfen (11) in die Königszapfenöffnung (15) hinein- und herausbewegt werden kann, beweglich ist,
- einer Blockiereinrichtung, bestehend aus:
- einem Blockierelement (23) sowie
- einer Verschiebungseinrichtung (25) zum Verschieben des Sperrelements (23) zwischen einer Sperrstellung, in der die Bewegung des Königszapfens (11) in der gekoppelten Position von Zugmaschine und Anhänger in Richtung weg von der Königszapfenöffnung (15) begrenzt ist, und einer Freigabestellung, in der der Königszapfen (11) uneingeschränkt in Richtung weg von der Königszapfenöffnung (15) bewegt werden kann,
**dadurch gekennzeichnet, dass** die Zugmaschine (1) ferner Folgendes umfasst:
- eine Sensoreinheit (13), die die Position des Königszapfens (11) in der Sattelkupplung (5) bestimmen kann, und
- eine Steuereinheit (7), mit der die Sensoreinheit (13) verbunden ist,
wobei sich das Sperrelement (23) in der Sperrstellung in der Eingangsöffnung (17) befindet und die Verschiebung des Königszapfens (11) in Richtung weg von der Königszapfenöffnung (15) blockiert, und das Sperrelement (23) in der Freigabestellung die Eingangsöffnung (17) freigibt, sodass der Königszapfen (11) durch die Eingangsöffnung (17) bewegt werden kann, wobei die Steuereinheit (7) so konfiguriert ist, dass sie die Sperreinrichtung sofort aktiviert, um das Sperrelement (23) von der Entriegelungsposition in die Sperrposition zu bewegen, sobald die Steuereinheit (7) erkennt, dass der Königszapfen (11) während der Fahrt in die Einfahrtsöffnung (17) eintritt, wobei gleichzeitig die Verriegelungseinrichtung aktiviert wird, um das Verriegelungselement (19) in die Verriegelungsposition zu bewegen.

2. Die Sattelzugkombination nach Anspruch 1, **dadurch gekennzeichnet, dass** die Zugmaschine (1) mit einem seriellen Datenbus (27) ausgestattet ist, mit dem die elektronischen Steuergeräte der Zugmaschine gekoppelt sind und ohne Host-Computer miteinander kommunizieren können, und dass die Steuereinheit (7), die Sensoreinheit (13) und die Verstelleinrichtung (25) an den Datenbus (27) angeschlossen sind.

3. Die Sattelzugkombination nach Anspruch 1 oder 2, **dadurch gekennzeichnet, dass** der Königszapfen (11) mit einer Markierung (29) in der Mitte seiner Unterseite versehen ist und die Sensoreinheit (13) einen Sensor (31) umfasst, der sich im gekoppelten Zustand von Zugmaschine und Anhänger mittig in der Königszapfenöffnung (15) unterhalb dieser befindet und mit dem der Abstand zwischen der Markierung (29) und dem Sensor (31) bestimmt werden kann, wobei die Steuereinheit (7) so konfiguriert ist, dass sie die Sperreinrichtung aktiviert und das Sperrelement von der Entriegelungsposition in die Sperrposition bewegt, falls die Steuereinheit (7) feststellt, dass der Abstand zwischen dem Sensor (31) und der Markierung (29) einen Grenzwert überschreitet.

4. Die Sattelzugkombination nach Anspruch 3, **dadurch gekennzeichnet, dass** die Zugmaschine (1) weitere Verstellmittel aufweist, die so konfiguriert sind, dass sie den Sensor (31) während und/oder unmittelbar nach dem Ankuppeln des Sattelaufliegers (3) an die Zugmaschine (1) von einer Ruheposition unterhalb des Königszapfens (11) in einem ersten Abstand von der Markierung (29), in der die Position der Markierung (29) mit dem Sensor (31) nicht bestimmt werden kann, in eine Arbeitsposition bewegen, in der sich der Sensor (31) in einem zweiten Abstand von der Markierung (29) befindet, in dem die Position der Markierung (29) mit dem Sensor (31) bestimmt werden kann.

## Revendications

1. Un ensemble tracteur-remorque comprenant :
- une remorque (3) munie d'un pivot d'attelage (11), et
- un tracteur (1) comprenant une sellette d'attelage (5) équipée de :
- une ouverture de pivot d'attelage (15) destinée à recevoir le pivot d'attelage (11), ainsi que
- une ouverture d'entrée (17) reliée à l'ouverture de pivot d'attelage (15), permettant de guider le pivot d'attelage (11) depuis une position extérieure à l'ouverture de pivot d'attelage (15) vers l'ouverture de pivot d'attelage (15) lors de l'attelage,
- un moyen de verrouillage, pour maintenir le pivot d'attelage (11) dans l'ouverture de pivot d'attelage (15), ce moyen de verrouillage comprenant un élément de verrouillage (19) mobile entre une position de verrouillage dans laquelle le pivot d'attelage (11), en position d'attelage mutuel du tracteur et de la remorque, est bloqué dans l'ouverture de pivot d'attelage (15), et une position de déverrouillage dans laquelle le pivot d'attelage (11) peut être inséré et retiré de l'ouverture de pivot d'attelage (15),
- un moyen de blocage comprenant :
- un élément de blocage (23), ainsi que
- un moyen de déplacement (25) pour déplacer l'élément de blocage (23) entre une position de blocage limitant le mouvement de le pivot d'attelage (11), en position d'attelage tracteur-remorque, dans une direction s'éloignant de l'ouverture d'attelage (15), et une position de déverrouillage permettant le déplacement illimité de l'axe d'attelage (11) dans une direction s'éloignant de l'ouverture d'attelage (15),
**caractérisé en ce que** le tracteur (1) comprend en outre :
- une unité de capteur (13) déterminant la position de le pivot d'attelage (11) dans la sellette d'attelage (5), et
- une unité de commande (7) à laquelle est connecté l'unité de capteur (13),
où l'élément de blocage (23), en position de blocage, se trouve dans l'ouverture d'entrée (17) et empêche le déplacement de le pivot d'attelage (11) dans une direction s'éloignant de l'ouverture d'attelage (15), et où l'élément de blocage (23), en position de déverrouillage, libère l'ouverture d'entrée (17) permettant ainsi le passage de le pivot d'attelage (11) à travers cette ouverture, l'unité de commande (7) est configuré pour activer immédiatement le mécanisme de blocage afin de déplacer l'élément de blocage (23) de la position de déverrouillage à la position de blocage, dès que l'unité de commande (7) détecte que le pivot d'attelage (11) pénètre dans l'ouverture d'entrée (17) pendant la conduite, le mécanisme de verrouillage étant activé pour déplacer l'élément de verrouillage (19) en position de verrouillage.

2. L'ensemble tracteur-remorque selon la revendication 1, **caractérisé en ce que** le tracteur (1) est équipé d'un bus de données (27) auquel sont connectés les calculateurs électroniques du tracteur et qui peuvent communiquer entre eux sans ordinateur central, et que le calculateur (7), l'unité de capteur (13) et le dispositif de déplacement (25) sont connectés au bus de données (27).

3. L'ensemble tracteur-remorque selon la revendication 1 ou 2, **caractérisé en ce que** le pivot d'attelage (11) est muni d'un repère (29) situé au centre de sa face inférieure et que l'unité de capteur (13) comprend un capteur (31) qui, lorsque le tracteur et la remorque sont attelés, est présent au milieu de l'ouverture du pivot d'attelage (15), sous celle-ci, et qui permet de déterminer la distance entre le repère (29) et le capteur (31), l'unité de commande (7) est configurée pour activer le dispositif de blocage afin de déplacer l'élément de blocage de la position de déverrouillage à la position de blocage, si elle détecte que la distance entre le capteur (31) et le repère (29) dépasse une valeur limite.

4. L'ensemble tracteur-remorque selon la revendication 3, **caractérisée en ce que** le tracteur (1) comprend des moyens de déplacement supplémentaires configurés pour déplacer le capteur (31), pendant et/ou immédiatement après l'attelage de la semi-remorque (3) au tracteur (1), d'une position de repos sous le pivot d'attelage (11) à une première distance du repère (29), où la position du repère (29) ne peut pas être déterminée avec le capteur (31), à une position de travail dans laquelle le capteur (31) est présent à une seconde distance du repère (29), où la position du repère (29) peut être déterminée avec le capteur (31).
